# EUROPEAN PATENT SPECIFICATION

(11) **EP 3 199 021 B1**
(45) Date of publication and mention of the grant of the patent: **27.01.2021**
(21) Application number: 15844925.6
(22) Date of filing: 18.09.2015
(51) Int. Cl.: A01K 61/00

(54) **CONTACT SENSOR DEVICE FOR FISH**
KONTAKTSENSOR FÜR FISCHE
DISPOSITIF CAPTEUR DE CONTACT POUR POISSON

(30) Priority: 22.09.2014 JP 2014192276
(43) Date of publication of application: 02.08.2017
(73) Proprietor: Nippon Suisan Kaisha, Ltd., Minato-ku Tokyo 105-8676 (JP)
(72) Inventor: CHEN, Weimin, Saiki-shi, Oita 876-1204 (JP)
(74) Representative: Plougmann Vingtoft a/s
(86) International application number: PCT/JP2015/076798
(87) International publication number: WO 2016/047639

(56) References cited:
- WO-A1-2010/117001
- JP-A- S5 820 136
- JP-A- 2001 155 571
- JP-B2- 5 324 997
- JP-U- S63 145 463
- US-A- 4 922 856

## Description

### Technical Field

The present invention relates to a tactile sensing device for fish, and particularly relates to a tactile sensing device for fish suitable for monitoring the presence or absence of feeding demand of fish.

### Background Art

An automatic feeding device is usually used for automatically feeding fish in a fish farm according to a predetermined feeding schedule.

In this case, environmental degradation of a fish farm occurs when fish are overfed, and fish growth retards when fish are underfed.

Thus, a demand feeding device has been devised to deliver a necessary and sufficient amount of feed to improve environment of fish farm, and ensure sustainable farming production by giving feed only when fish want to voluntarily take feed.

A switch device for activating such a demand feeding device has been proposed in patent document 1.

A switch device for activating a demand feeding device is provided with a fixed contact supported by a housing, a movable contact piece having a movable contact facing the fixed contact and supported by a shock absorber made of a viscoelastic resin, a pressing piece which is movably supported by the housing and which moves the movable contact piece towards the fixed contact direction, and an operating piece which is supported movably in a rocking motion by the housing via a hinge portion and which moves the pressing piece. Therefore, this portion functions as a sensor for activating the switch.

Furthermore, a horizontal rod is fixed to the operating piece, the operating piece and horizontal rod extend in a direction away from the hinge, a vertical rod is connected to the horizontal rod in a freely movable state, and a marked portion is attached to the lower end of the vertical rod.

Also, due to movement of the marked portion attached to the vertical rod, the movable piece turns the fixed contact and movable contact ON and OFF by operating the vertical rod, horizontal rod, operating piece, and pressing piece.

In such a switch device for activating a demand feeding device, since the vertical rod that functions as a sensor is arranged in seawater as it is, there is a problem in which aquatic organisms such as seaweeds or dirt easily adhere to or entangle with the vertical rod, and the sensor device malfunctioning, even though the fish did not bite the fake feed, due to the rod being directly affected by movement of seawater.

Furthermore, when used for large-sized marine fish species such as yellow-tail and tuna, since the force of pulling the vertical rod is strong, the sensor could be damaged, and a malfunction may occur due to vibration of the entire device as a result of pulling of the sensor or due to vibration as a result of contact between the sensor and fish that is swimming.

Thus, the present applicant provides a tactile sensing device for fish as already illustrated in patent document 2.

The tactile sensing device for fish includes a yarn having a marked portion attached at its end for fish to pull, a pressure sensor for sensing pressure, a pressing member connected to the other end of the yarn and for transmitting a tensile force applied to the yarn to the operating portion of the pressure sensor, a protective cylinder for protecting the yarn, and an elastic member wherein the pressing member prevents an overload on the pressure sensor and the yarn from being cut; since the yarn is protected with the protective cylinder, it is difficult for aquatic organisms such as seaweeds or dirt to adhere to the yarn, thus it is possible to prevent erroneous operation by preventing the yarn to be directly affected by movement of seawater, and prevent overload on the pressure sensor by the elastic member and prevent the yarn from being cut.

### Prior Art Documents

### Patent Literature

Patent Document 1: Japanese Unexamined Patent Application Publication No. 2001-155571A
Patent Document 2: Japanese Patent No. 5324997B A tactile sensing device for fish according to the preamble of claim 1 is known from JP 5 324997 B2. Other tactile sensing devices for fish are known from JP S58 20136 A and JP 2001 155571 A.

### Summary of Invention

### Technical Problem

In the aforementioned tactile sensing device for fish, although it is possible to prevent overload on the pressure sensor using the elastic member and prevent the yarn from being cut using the elastic member, the occurrence in change of tensile force to the marked portion during the growth process of fish cannot be predicted.

For example, for large-sized fish such as yellow-tail, salmon, and tuna, the strength of pulling the marked portion during the growth process changes greatly, and for example, when the fish is small, force of pulling the sensor is not so strong, and when the tensile force of the elastic member is too strong, the detection capacity of the pressure sensor decreases, and it becomes difficult to detect feeding behavior.

Thus, if the elastic force of the elastic member is adjusted to a weak level for the small fish with a small pulling force, as the fish grow and become larger, the force of pulling the marking portion increases, and a large pressure is applied to the pressure sensor, which may result in a failure of the pressure sensor.

The objective of the present invention is to provide a tactile sensing device for fish in which the elastic force of the elastic member can be adjusted for preventing overload on the pressure sensor and the yarn from being cut, according to the change of the force of pulling the marked portion during feeding in response to changes according to the growth state of relatively large-sized fish.

### Solution to Problem

(1) A tactile sensing device for fish according to claim 1 includes: yarn with a marked portion attached at its end for fish to pull, a pressure sensor for sensing pressure,
   a pressing member connected to the other end of the yarn and for transmitting a tensile force applied to the yarn to an operating portion of the pressure sensor, and
   an elastic member for preventing overload on the pressure sensor in the pressing member and the yarn from being cut; wherein
   elastic force adjusting means is provided in the elastic member for adjusting an elastic force in the elastic member according to the tensile force applied in the pressing member.
   According to the present invention, the elastic force of the elastic member is adjustable using the elastic force adjustable means in response to the change of the force of pulling the marked portion during feeding of relatively large-sized fish which changes greatly depending on the growth state, good feeding behavior can be detected according to the growth state of the fish, and it is also possible to prevent the pressure sensor from failure and the like.
   Furthermore, by adjusting the elastic force of the elastic member, the sensitivity of the pressure sensor can be easily adjusted.
   In addition, if a display means that can quantitatively display the adjustment result of the elastic force is provided, the elastic force can be adjusted more easily.
   Moreover, the tactile sensing device for fish according to (1), wherein one end of the elastic member is connected to the pressing member and the other end is connected to the elastic force adjusting means, and the elastic force adjusting means may applies a tensile force to an elastic member with an arbitrary force in a direction opposite to the tensile force applied to the pressing member.
   Using such a configuration, a simple, inexpensive configuration is possible where the elastic force adjusting means can apply a tensile force to the elastic member with an arbitrary force in a direction opposite to the tensile force applied to the pressing member.
   In this case, the elastic force adjusting means, for example, may use a member that applies a tensile force to the elastic member by sliding or rotating.
(2) The tactile sensing device for fish according to (1), wherein
   the elastic force adjusting means may have
   a rotary disc fixed by fixing means at an arbitrary rotational position, and
   a tensile member having one end attached to the outer periphery of the rotary disc, the other end connected to the elastic member, wound around the rotary disc as the rotary disc rotates, and applies a tensile force to the elastic member.
   Using such a configuration, it is possible to form an elastic force adjusting means with a simple configuration of a rotary disc and a tensile member.
   Furthermore, by fixing the rotary disc using the fixing means, a predetermined tensile force can be easily and reliably applied and maintained.
(3) The tactile sensing device for fish according to (2), wherein a scale indicating a rotation angle is provided in the rotary disc, and a scale position may be read by a pointer provided at the corresponding position of the rotary disc.

Using such a configuration, it is possible to confirm the rotation angle of the rotary disc while visually checking the scale and pointer provided on the rotary disc, and to easily and reliably carry out elastic force adjustment of the elastic member.

### Brief Description of Drawings

FIG. 1 is a cross-sectional diagram illustrating a tactile sensing device for fish according to one embodiment of the present invention.
FIG. 2 is an enlarged perspective view of the main portions of the tactile sensing device for fish illustrated in FIG. 1.
FIG. 3 is a schematic diagram illustrating the feeding device using the tactile sensing device for fish illustrated in FIG. 1.

### Description of Embodiments

Hereinafter, embodiments of the present invention will be described with reference to drawings.

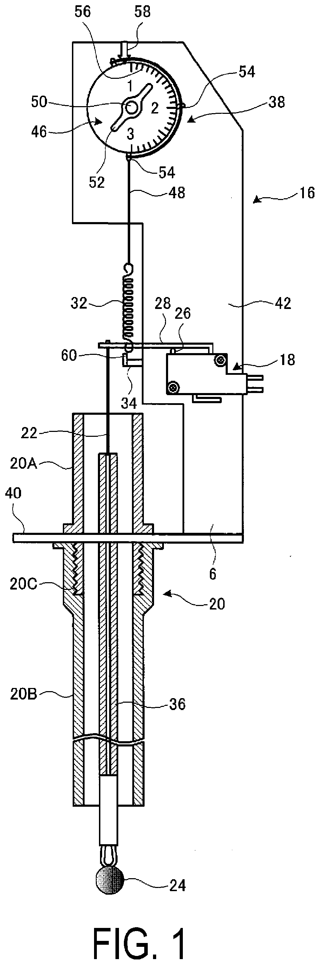

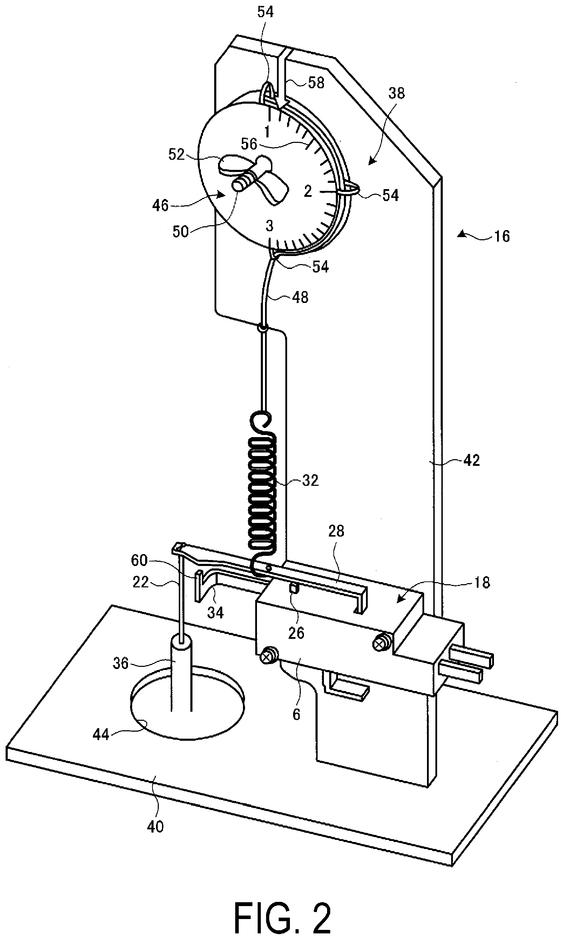

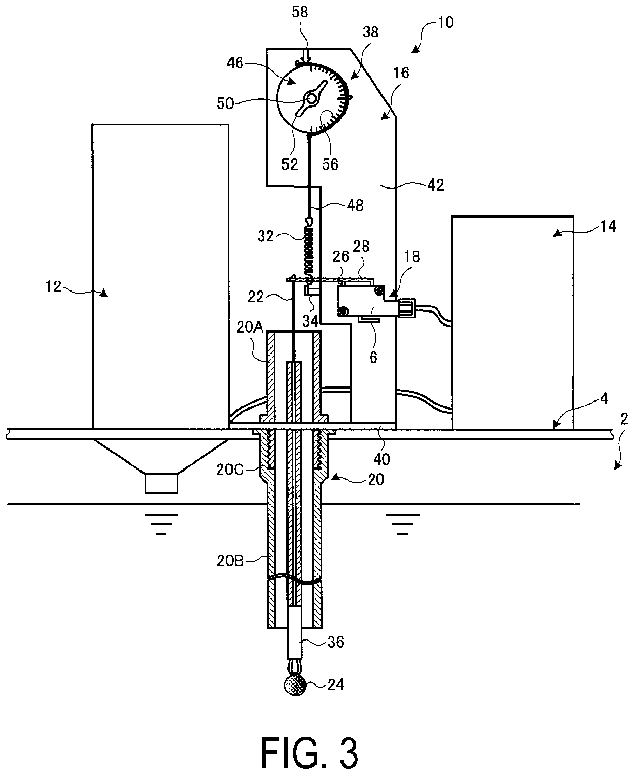

FIG. 1 is a cross-sectional diagram illustrating a tactile sensing device for fish according to one embodiment of the present invention, FIG. 2 is an enlarged perspective view of the main portion of the tactile sensing device for fish illustrated in FIG. 1, and FIG. 3 is a schematic diagram illustrating the feeding device using the tactile sensing device for fish illustrated in FIG. 1.

The feeding device 10, as illustrated in FIG. 3, is disposed in a central position of a pier 4 hung on a cage 2 so as to drop feed to the center of the cage 2.

Furthermore, the feeding device 10 is used as a spontaneous feed feeding device having a hopper for feeding 12, a controller 14, and a tactile sensing device for fish 16, when the tactile sensing device for fish 16 detects a feeding demand of fish, a feeding signal is sent to the controller 14, and a feeding signal is transmitted to the opening and closing lid (not illustrated) of the feeding hopper 12 via the controller 14, where the opening and closing lid is opened so as to be fed from the feeding hopper 12 for a predetermined time.

The tactile sensing device for fish 16, as illustrated in FIG. 1 and FIG. 2, has a pressure sensor 18 for sensing pressure, a marked portion 24 that is pulled by the fish, yarn 22, a pressing piece 28 as a pressing member for transmitting the pulling of the yarn 22 to the pressure sensor 18, a stopper 34, an elastic member 32, a protective cylinder 20, and an elastic force adjusting member 38.

The pressure sensor 18 instructs the start of the feeding in the spontaneous feed feeding device, and is connected to the controller 14 illustrated in FIG. 3.

Furthermore, the pressure sensor 18 is attached to the side surface of the vertical plate 42 erected on the horizontal plate 40, the operating portion 26 for turning the contact (not illustrated) ON and OFF protrudes in a state being biased outward to the top surface of the housing 6, the contact is maintained in an OFF state in a state in which no operating force is applied to the operating portion 26, and the contact is turned ON when a pressing force is applied inward to the operating portion 26.

In the housing 6, the pressing piece 28, in which one end is rotatably supported in the housing 6, is disposed along on side (upper side) of the operating portion 26 side, and the function for transmitting a force to the pressure sensor 18 can be achieved.

Furthermore, the other side of the pressing piece 28 is in a state extending outward from the housing 6.

Also, when the pressing piece 28 comes into contact with the operating portion 26 in the middle position of the pressing piece 28 and a force is applied to the pressing piece 28 on the operating portion 26 side, the pressing piece 28 resists the biasing force of the operating portion 26, and the contact is turned ON by the operating piece 26 being pushed.

The protective cylinder 20 is in a state in which a upper cylinder 20A and a lower cylinder 20B are connected by a screw portion 20C, is inserted through a through hole 44 (refer to FIG. 2) formed in the horizontal plate 40, and is attached to the horizontal plate 40 by being connected by the screw portion 20 in a state where the horizontal plate 40 is sandwiched by the upper cylinder 20A and the lower cylinder 20B.

Furthermore, by allowing the protective cylinder 20 to be separated by the screw portion 20C, interior maintenance can easily be done, and the lower cylinder 20B having different lengths can be exchanged according to the distance from the pier 4 to the water surface of the cage 2 and other conditions.

In addition, the tip of the pressing piece 28 is set so as to be positioned in the opening center position of the protective cylinder 20.

Furthermore, the lower end of the protective cylinder 20 is in an open state and the lower side can be inserted under the water surface of the cage 2.

In addition, the protective cylinder 20 is cylindrical, having a diameter of 2 to 3 cm that does not easily bend due to the flow of seawater, and cleaning is easy even when the interior is dirty.

One end (upper end) of the yarn 22 is connected at the tip of the pressing piece 28 of the pressure sensor 18, and is connected to the operating piece 26 via the pressing piece 28.

The pressing piece 28 side, that is, the pressure sensor 18 is fixed to the vertical plate 42, thus, the wiring of the pressure sensor 18 is not affected even if the protective cylinder 20 is rotated by the impact of a wave.

Furthermore, the yarn 22 is inserted in a state hanging inside the protective cylinder 20 so that the other end (lower end) of the yarn 22 is led out from the lower end of the protective cylinder 20.

The yarn 22 is made of a synthetic resin thread or a synthetic resin thread incorporating a metal wire or the like, and is durable against a certain degree of tensile force.

The marked portion 24 is attached to the other end (lower end) of the yarn 22 so as to be disposed below the protective cylinder 20, the yarn 22 is pulled due to the fish biting at the marked portion 24, the tip of the pressing piece 28 lowers, and the operating portion 26 is pressed so that the pressure sensor 18 is operated.

As the marked portion 24, it is preferable that it is a marked portion easy for fish to see, has a size and strength to make it easy for fish to enter in the mouth, and is similar in size, color, and shape to feed such as a pellet.

Thus, in the present embodiment, since the yarn 22 is inserted through the protective cylinder 20 and protected by the protective cylinder 20, aquatic organisms such as seaweed or dirt are less likely to adhere to or entangle with the yarn 22, and it is possible to prevent the yarn 22 to be directly affected by movement of the seawater and to prevent erroneous operation.

It is preferable for the protective cylinder 20 to be always protected up to a certain degree under the water surface so that aquatic organisms such as seaweeds or dirt are not easily entangled.

Such an effect can be obtained by keeping the protective cylinder 20 up to 10 cm or greater under the water surface, but preferably 20 cm or greater, and more preferably 30 m or greater, and thus it is particularly possible to prevent entanglement of aquatic organisms such as seaweeds or dirt floating on the sea.

The protective cylinder may be made of any material as long as it has certain strength. Synthetic resin or the like is preferable to metal because it is put into seawater.

Since the elastic member 32 prevents an overload on the pressure sensor 18 and the yarn 22 from being cut, when the tensile force from the yarn 22 is applied to the pressing piece 28, the elastic force is applied in a direction opposite to the tensile force.

Specifically, a coil spring is used as the elastic member 32, one end (lower end) of the coil spring is connected to the tip side of the pressing piece 28, the other end (upper end) is connected to the elastic force adjusting means 38 so that an elastic force is applied upward when the tensile force is applied downward to the yarn 22.

As the elastic member 32, it is not limited to a coil spring, but various elastic member can be used as long as they can prevent overload on the pressure sensor 18 and the yarn 22 from being cut.

Thus, by absorbing the impact caused by the tensile force from the yarn 22 using the elastic member 32, overload applied to the pressure sensor 18 and cutting of the yarn 22 can be prevented, thereby improving durability.

In addition, in the present embodiment, a stopper 34 is provided in one portion of the path from the operating portion 26 of the pressure sensor 18 to the marked portion 24 for preventing overload on the pressure sensor 18.

Specifically, the stopper 34 is configured by a stopper plate formed protruding at a position below the pressing piece 28 of the vertical plate 42, and the pressing piece 28 does not move downward by the pressing piece 28 being brought into contact with the stopper plate.

Furthermore, in the tip of the stopper 34, a bent portion 60 protruding upward in an L shape is provided to prevent large-sized fish from pulling the pressing piece 28 downwards and from moving under the stopper 34.

The stopper 34 is not limited to a stopper plate contacting the pressing piece 28, and for example, may be formed in such a way that a stopper body for preventing movement of the protruding portion formed on the yarn 22 is formed at a position in the middle of the vertical plate 42, and the formation position thereof may be a portion of the path leading from the operating portion 26 of the pressure sensor 18 to the marked portion 24.

Thus, overload on the pressure sensor 18 can be prevented using the stopper 34 provided on one portion of the path leading from the operating portion 26 of the pressure sensor 18 to the marked portion 24, thereby further improving the durability.

In addition, in the present embodiment, a reinforcing member 36 is provided near the contact portion of the lower portion of at least the protective cylinder 20 of the yarn 22, and the reinforcing member 36 prevents the yarn 22 from directly contacting the lower portion of the protective cylinder 20, and prevents the yarn 22 from being worn out, improving the durability.

The reinforcing member 36 carries out reinforcement by covering the yarn 22 with a cylinder made of a synthetic resin, and for example, a coating of a synthetic resin such as polyolefin to the yarn 22 with a predetermined thickness may be applied.

The elastic force adjusting means 38 adjusts the elastic force of the elastic member 32 according to the tensile force applied on the pressing piece 28, and by making the elastic force of the elastic member 32 adjustable by using the elastic force adjustable means 38 according to the change of strength of the tensile force with respect to the marked portion during feeding of relatively large-sized fish which changes greatly depending on the growing state, good feeding behavior can be detected according to the growing state of the fish, and it is also possible to prevent failure and the like of the pressure sensor 18.

The elastic force adjusting means 38 applies a tensile force to the elastic member 32 with an arbitrary force in a direction opposite to the tensile force applied to the pressing piece 28, can be fixed in an arbitrary position to slide or rotate, and can use a simple configuration that is inexpensive and that can apply a tensile force to the elastic member and the like.

Specifically, in the present embodiment, the elastic force adjusting means 38 has a rotary disc 46 and a tensile member 48.

The rotary disc 46 is attached to the vertical plate 42 in a manner allowing for rotation around a rotary shaft 50 in a position above the pressing piece 28 and can be fixed at an arbitrary rotating position using the fixing means 52.

Specifically, the rotary shaft 50 is formed by a screw member, the fixing means 52 is formed by a wing nut screwed to the rotary shaft 50 made from a screw member, and the rotary disc 46 is fixed by rotating the rotary disc 46 and tightening the wing nut at an arbitrary position.

The tensile member 48 has a flexible cord shape, one end is attached and fixed to the outer periphery of the rotary disc 46, and the other end is connected to the upper end of the elastic member 32 directly below the outer periphery of the rotary disc 46 via a plurality of guide pieces 54 attached to the outer periphery of the rotary disc 46.

Also, the tensile member 48 is wound around the outer periphery of the rotary disc 46 along with the counterclockwise rotation of the rotary disc 46, and a tensile force is applied to the elastic member 32 by the lower end of the tensile member 48 being raised.

Thus, it is possible to form the elastic force adjusting means 38 with a simple configuration of the rotary disc 46 and the tensile member 48, and also, by fixing the rotary disc 46 using the fixing means 52, a predetermined tensile force can be easily and reliably applied and maintained.

In addition, a scale 56 indicating the rotation angle is provided in the rotary disc 46, the rotation angle of the rotary disc 46 can be confirmed while visually checking the scale 56 and pointer 58 provided on the rotary disc 46 by making the scale position readable using the pointer 58 provided on the vertical plate 42 in a position corresponding to the rotary disc 46 (directly above), and it is possible to easily and reliably carry out elastic force adjustment of the elastic member.

Therefore, not only is the adjustment of the strength of the elastic force using the scale 56 and the pointer 58 easy, but also the temporarily set value can be easily confirmed by the scale 56 and pointer 58, and adjustment can also be easily carried out in the next step.

Furthermore, it is possible to input the detection to a PC or the like by the pressure sensor 18, and the necessary feed amount can be maintained by adjusting the elastic force of the elastic member according to the frequency or the like of the feeding behavior.

In addition, it is possible to carry out elastic force adjustment of the elastic member 32 according to the tensile force by detecting the strength of the tensile force on the marked portion 24 during the growth process by, for example, a pressure detection sensor such as a strain sensor or the like.

Furthermore, the feeding state of the fish is filmed with a CCD camera or the like, and the eating state during feeding is observed by a ground monitor so that the elastic force of the elastic member 32 may be adjusted by the elastic force adjusting means 38 according to the feeding state.

In addition, the detection data of the pressure sensor for detecting the feeding state of the fish is sent to the ground, a drive device provided in the elastic force adjusting means is driven based on that data, and the elastic force of the elastic member may be automatically adjusted.

The present invention is particularly suitable for use during the growing process of large-sized marine fish species such as yellow-tail, greater amberjack, salmon, trout, sea bream, tuna and the like which have a strong force of pulling a marked portion.

### Industrial Applicability

The present invention is not limited to the present embodiment and can be modified into various forms within the scope of the present invention.

For example, the tactile sensing device for fish according to the present invention, in addition to being used to instruct the start of the spontaneous feed feeding device in the aforementioned embodiment, can also be used for instructing to end feeding in the automatic feeding device where feeding is automatically carried out according to a predetermined schedule, and for sensing the presence or absence of a tension behavior for fish such as a feeding demand of fish.

### Reference Signs List

- 10: Feeding device
- 16: Tactile sensing device for fish
- 18: Pressure sensor
- 20: Protective cylinder
- 22: Yarn
- 24: Marked portion
- 26: Operating portion
- 28: Pressing piece
- 32: Elastic member
- 38: Elastic force adjusting means
- 46: Rotary disc
- 48: Tensile member
- 52: Fixing means
- 56: Scale
- 58: Pointer

## Claims

1. A tactile sensing device for fish (16), comprising:
a yarn (22) with a marked portion attached to its end for fish to pull,
a pressure sensor (18) for sensing pressure,
a pressing member (28) connected to the other end of the yarn and for transmitting a tensile force applied to the yarn to an operating portion of the pressure sensor, and
an elastic member (32) for preventing overload on the pressure sensor and the yarn from being cut;
said tactile sensing device being **characterized in that** one end of the elastic member is connected to the pressing member and the other end is connected to an elastic force adjusting means, and wherein the elastic force adjusting means (38) is provided near the elastic member for adjusting an elastic force in the elastic member according to a tensile force applied on the pressing member, by the yarn when a fish pulls the yarn, and the elastic force adjusting means applies a tensile force to the elastic member with an arbitrary force in a direction opposite the tensile force applied to the pressing member by the yarn.

2. The tactile sensing device for fish according to claim 1, wherein
the elastic force adjusting means has a rotary disc (46) fixed by fixing means at an arbitrary rotational position, and
a tensile member (48) has one end attached to the outer periphery of the rotary disc, and the other end connected to the elastic member, wound around the rotary disc as the rotary disc rotates, and applies a tensile force to the elastic member.

3. The tactile sensing device for fish according to claim 2, wherein
a scale (56) indicating a rotation angle is provided in the rotary disc (46), and a scale position can be read by a pointer provided at the corresponding position of the rotary disc.

## Patentansprüche

1. Taktile Erfassungsvorrichtung für Fische (16), umfassend:
ein Garn (22) mit einem markierten Abschnitt, der an seinem Ende befestigt ist, damit ein Fisch daran ziehen kann,
einen Drucksensor (18) zum Erfassen von Druck,
ein Druckelement (28), das mit dem anderen Ende des Garns verbunden ist und das zum Übertragen einer Zugkraft, die an dem Garn anliegt, an einen Betätigungsabschnitt des Drucksensors bestimmt ist, und
ein elastisches Element (32) zum Verhindern einer Überlastung an dem Drucksensor und eines Reißens des Garns;
wobei die taktile Erfassungsvorrichtung **dadurch gekennzeichnet ist, dass** ein Ende des elastischen Elements mit dem Druckelement verbunden ist und das andere Ende mit einem elastischen Krafteinstellungsmittel verbunden ist, und wobei
das elastische Krafteinstellungsmittel (38) nahe dem elastischen Element zum Einstellen einer elastischen Kraft in dem elastischen Element gemäß einer Zugkraft, die durch das Garn an dem Druckelement anliegt, wenn ein Fisch an dem Garn zieht, bereitgestellt ist, und
das elastische Krafteinstellungsmittel eine Zugkraft auf das elastische Element mit einer beliebigen Kraft in einer Richtung entgegengesetzt zu der Zugkraft, die durch das Garn auf das Druckelement ausgeübt wird, ausübt.

2. Taktile Erfassungsvorrichtung für Fische nach Anspruch 1, wobei
das elastische Krafteinstellungsmittel eine Drehscheibe (46) aufweist, die durch ein Fixierungsmittel in einer beliebigen Drehposition fixiert ist, und
ein Zugelement (48) mit einem Ende an dem äußeren Umfang der Drehscheibe befestigt ist, und das andere Ende mit dem elastischen Element verbunden ist, und das um die Drehscheibe gewickelt wird, wenn sich die Drehscheibe dreht, und eine Zugkraft auf das elastische Element ausübt.

3. Taktile Erfassungsvorrichtung für Fische nach Anspruch 2, wobei
eine Skala (56), die einen Drehwinkel angibt, in der Drehscheibe (46) bereitgestellt ist, und eine Skalenposition durch einen Zeiger, der an der entsprechenden Position der Drehscheibe bereitgestellt ist, abgelesen werden kann.

## Revendications

1. Dispositif de détection tactile pour poissons (16), comprenant:
un fil (22) avec une partie marquée fixée au niveau de son extrémité permettant au poisson de tirer,
un capteur de pression (18) destiné à détecter la pression,
un élément de pression (28) raccordé à l'autre extrémité du fil et destiné à transmettre une force de traction appliquée au fil à une partie fonctionnelle du capteur de pression, et
un élément élastique (32) destiné à empêcher une surcharge sur le capteur de pression et le fil d'être coupé ;
ledit dispositif de détection tactile étant **caractérisé en ce qu'**une extrémité de l'élément élastique est raccordée à l'élément de pression et l'autre extrémité est raccordée à un moyen de réglage de force élastique, et
ledit moyen de réglage de force élastique (38) étant disposé près de l'élément élastique pour régler une force élastique dans l'élément élastique selon une force de traction appliquée sur l'élément de pression, par le fil lorsqu'un poisson tire le fil, et
ledit moyen de réglage de force élastique appliquant une force de traction à l'élément élastique avec une force arbitraire dans une direction opposée à la force de traction appliquée à l'élément de pression par le fil.

2. Dispositif de détection tactile pour poissons selon la revendication 1,
ledit moyen de réglage de force élastique possédant un disque rotatif (46) fixé par un moyen de fixation à une position de rotation arbitraire, et
un élément de traction (48) possédant une extrémité fixée à la périphérie externe du disque rotatif, et l'autre extrémité raccordée à l'élément élastique, enroulée autour du disque rotatif lorsque le disque rotatif tourne, et appliquant une force de traction à l'élément élastique.

3. Dispositif de détection tactile pour poissons selon la revendication 2,
une échelle (56) indiquant un angle de rotation étant disposée dans le disque rotatif (46), et une position d'échelle pouvant être lue par un pointeur disposé au niveau de la position correspondante du disque rotatif.
